# EUROPÄISCHE PATENTANMELDUNG

(11) **EP 4 052 825 A1**
(43) Veröffentlichungstag der Anmeldung: **07.09.2022**
(21) Anmeldenummer: 22160049.7
(22) Anmeldetag: 03.03.2022
(51) Int. Cl.: B23F 23/08, B23F 23/12, B23F 3/00

(54) **ZAHNRADBEARBEITUNGSMASCHINE UND VERFAHREN ZUM HERSTELLEN EINES ZAHNRADES**

(30) Priorität: 03.03.2021 DE 102021105099
(71) Anmelder: Sabbagh, Maher, 33604 Bielefeld (DE)
(72) Erfinder: Sabbagh, Maher, 33604 Bielefeld (DE)
(74) Vertreter: Kleine, Hubertus

(57) **Zusammenfassung**

Die Erfindung betrifft eine Zahnradbearbeitungsmaschine mit einer Halterung für einen Zahnradrohling (1') und mit einem Bearbeitungskopf (20) mit einem Bearbeitungswerkzeug (26), um mindestens eine Zahnlücke (4) eines Zahnes (2) zu bearbeiten und sukzessive aus dem Zahnradrohling (1') ein Zahnrad zu erstellen. Die Zahnradbearbeitungsmaschine zeichnet sich durch Tastelement (36) aus, das an mindestens einer Flanke (3) in einer bereits erstellten Zahnlücke (4) des Zahnradrohlings (1') anliegt und eine Drehstellung des Zahnradrohlings (1') für ein Bearbeiten einer weiteren Zahnlücke (4) festlegt. Die Erfindung betrifft weiterhin ein Verfahren zur Herstellung eines Zahnrads aus einem Zahnradrohling (1') anhand eines defekten Zahnrads (1) mit einer derartigen Zahnradbearbeitungsmaschine.

## Beschreibung

Die Erfindung betrifft eine Zahnradbearbeitungsmaschine mit einer Halterung für einen Zahnradrohling und mit einem Bearbeitungskopf mit einem Bearbeitungswerkzeug, um mindestens jeweils eine Zahnlücke eines Zahnes zu bearbeiten und sukzessive aus dem Zahnradrohling ein Zahnrad zu erstellen. Die Erfindung betrifft weiterhin ein Verfahren zum Herstellen eines Zahnrades.

Zahnräder sind in vielen verschiedenen Größen und Zahngeometrien wichtige Bestandteile vieler mechanischer bzw. elektromechanischer Maschinen und Vorrichtungen. In industrieller Fertigung werden Zahnräder in der Regel durch Wälzfräsen oder Profilfräsen gefertigt. Dafür muss eine aufwendige und spezielle Zahnradfräsmaschine vorhanden sein, die zudem noch aufwendig für ein bestimmtes herzustellendes Zahnrad eingerichtet werden muss. Daher eignen sich diese Fertigungsverfahren nur für große Losgrößen.

Eine Herstellung in kleinen Stückzahlen ist auch mittels Freiformfräsen möglich, insbesondere durch einen Einsatz von CNC (Computerized Numerical Control) Werkzeugmaschinen. Auch diese sind jedoch teuer und stehen kleineren Firmen und insbesondere Reparaturwerkstätten in den seltensten Fällen zur Verfügung. Zudem sind umfangreiche Programmierkenntnisse für derartige CNC-Werkzeugmaschinen erforderlich, um die komplexen Geometrien von Zahnrädern umsetzen zu können.

Schließlich ist es weiter möglich, Zahnräder in additiven Verfahren, z. B. 3D-Druckverfahren herzustellen. 3D-Druck mit Kunststoffmaterialien, insbesondere Thermoplasten, ist zwar verbreitet und kostengünstig, die üblicherweise benötigte Präzision und Belastbarkeit der Zahnräder wird jedoch nicht erreicht. 3D-Druck mit Metallmaterialien wiederum ist aufwendig und die benötigten 3D-Drucker sind sehr hochpreisig.

Es ist eine Aufgabe der vorliegenden Erfindung, eine mechanisch einfach aufgebaute und leicht bedienbare Vorrichtung zum Bearbeiten von Zahnrädern zu schaffen. Insbesondere soll es mit dieser Vorrichtung möglich sein, ausgehend von einem Muster, beispielsweise einem defekten Zahnrad eines Gerätes, ein Ersatz-Zahnrad herzustellen. Es ist eine weitere Aufgabe, ein Verfahren zum Herstellen eines Zahnrades mit einer derartigen Maschine anzugeben.

Diese Aufgabe wird durch eine Vorrichtung bzw. ein Verfahren mit den jeweiligen Merkmalen der unabhängigen Ansprüche gelöst.

Eine erfindungsgemäße Zahnradbearbeitungsmaschine der eingangs genannten Art zeichnet sich durch ein Tastelement aus, das an mindestens einer Flanke in einer bereits erstellten Zahnlücke des Zahnradrohlings anliegt und eine Drehstellung eines Zahnradrohlings für ein Bearbeiten einer weiteren Zahnlücke festlegt.

Mit einer derartigen Zahnradbearbeitungsmaschine kann ein erfindungsgemäßes Verfahren zur Herstellung eines Zahnrads aus einem Zahnradrohling anhand eines defekten Zahnrads durchgeführt werden, das die folgenden Schritte aufweist:
- Einsetzen des Zahnradrohlings in eine Halterung der Zahnradbearbeitungsmaschine;
- Erstellen einer Zahnlücke mithilfe eines Bearbeitungswerkzeugs der Zahnradbearbeitungsmaschine;
- Entnehmen des Zahnradrohlings und Einsetzen des defekten Zahnrads in die Halterung;
- Ausrichten einer Drehstellung des defekten Zahnrads so, dass das Bearbeitungswerkzeug korrekt in eine noch intakte Zahnlücke des defekten Zahnrads eingreift;
- Einsetzen eines Tastelements in eine weitere Zahnlücke, die der Zahnlücke, in die das Bearbeitungswerkzeug eingreift, benachbart ist und Fixieren des Tastelements in dieser Stellung;
- Entnehmen des defekten Zahnrads;
- Einsetzen des Zahnradrohlings in die Halterung, wobei das Tastelement in die zuletzt erstellte Zahnlücke eingreift; und
- Erstellen einer weiteren Zahnlücke mithilfe des Bearbeitungswerkzeugs.

Die beiden letztgenannten Schritte können dann sukzessive wiederholt werden, bis der Zahnradrohling eine benötigte Anzahl an Zahnlücken und damit Zähnen aufweist.

Durch das Tastelement wird es möglich, die Geometrie des defekten Zahnrads abzutasten und in Art eine Lehre auf den Zahnradrohling zu übertragen. Insbesondere wird der Modulo, also der Drehwinkelabstand zweier benachbarter Zähne (bzw. Zahnlücken), auf das neu zu erstellende Zahnrad übertragen. Durch die Zahnradbearbeitungsmaschine kann auf einfache Weise eine Kopie anhand eines defekten Zahnrads erstellt werden, ohne dass die Geometrie numerisch erfasst werden muss und das Ersatzzahnrad kompliziert nachentwickelt werden muss. Die Zahnradbearbeitungsmaschine und das erfindungsgemäße Verfahren eignen sich somit besonders gut für eine Einzelstückanfertigung, z.B. zu Reparaturzwecken.

Vorteilhafte Ausgestaltung und Weiterbildungen sind in den abhängigen Ansprüchen wiedergegeben.

Die Erfindung wird nachfolgend anhand von Ausführungsbeispielen mithilfe von Figuren näher erläutert. Es zeigen:
- Figur 1: eine Seitenansicht eines Ausführungsbeispiels einer anmeldungsgemäßen Zahnradbearbeitungsmaschine;
- Figur 2: ein Stirnzahnrad als Beispiel eines mit der in Figur 1 gezeigten Zahnradbearbeitungsmaschine aus einem Rohling herstellbares Zahnrad;
- Figur 3a-e: jeweils eine Draufsicht auf die Zahnradbearbeitungsmaschine gemäß Figur 1 zu verschiedenen Stadien der Zahnradherstellung;
- Figur 4a, b: ein beispielhaftes Zahnrad sowie eine Auswahl von Haltedornen (Figur 4a) bzw. Tastelementen (Figur 4b);
- Figur 5a, b: jeweils eine isometrische Darstellung eines Zahnrades sowie eines Tastelements mit Halter;
- Figur 6: eine schematische Darstellung zur Herstellung eines Zahnrades mit einer Passstiftwellenaufnahme.

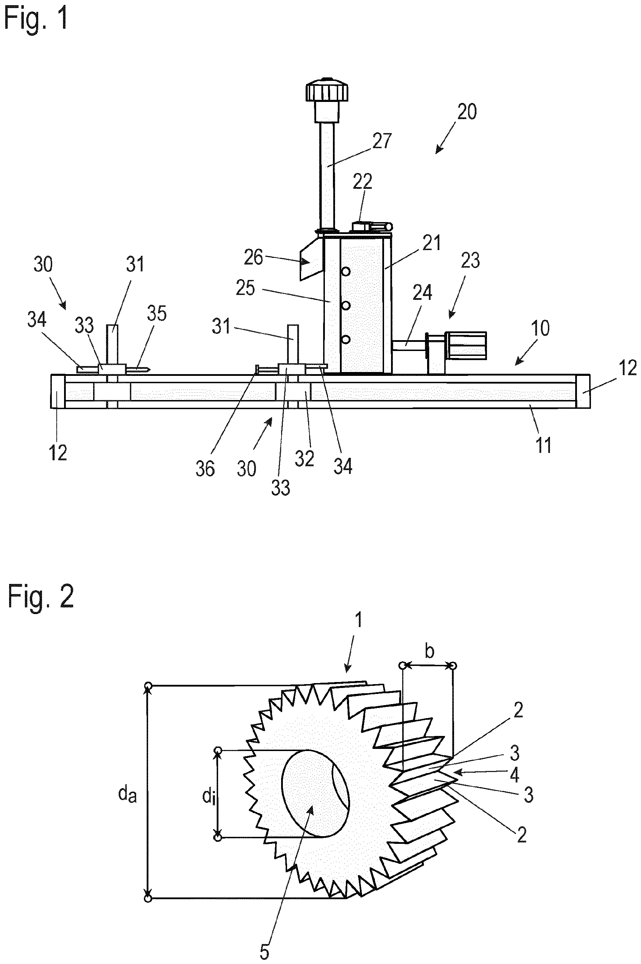

Figur 1 zeigt eine schematische Seitenansicht einer Zahnradbearbeitungsmaschine in einem Ausführungsbeispiel.

Die Zahnradbearbeitungsmaschine weist eine Führung 10 auf, die im vorliegenden Fall Längsprofile 11 umfasst, die stirnseitig über Querverbinder 12 miteinander verbunden sind. Auf diese Führung 10 ist ein Bearbeitungskopf 20 gesetzt, der in seiner Position entlang der Führung 10 verschoben werden kann. Der Bearbeitungskopf 20 umfasst dabei einen vertikal von der Führung 10 aufragenden Ständer 21, der über eine Befestigung 22 in seiner Position arretiert werden kann. Die Befestigung 22 umfasst beispielsweise eine innen durch den Ständer 21 geführte Gewindestange, die in eine entlang der Führung 10 verschiebbare Mutter eingreift. Zur reproduzierbaren Feineinstellung der Position des Bearbeitungskopfes 20 ist der Ständer 21 mit einem Spindelvorschub 23 mit einer Spindel 24 gekoppelt. Der Spindelvorschub kann unabhängig von dem Ständer 21 an der Führung 10 festgelegt werden, so dass der Ständer 21 über die Spindel 24 in eine gewünschte Position gebracht werden kann und dann in dieser Position mittels der Befestigung 22 festgelegt werden.

Am Ständer 21 ist eine Vertikalführung 25 ausgebildet, die ein Bearbeitungswerkzeug 26 vertikal führt. Bei dem vorliegenden Beispiel ist das Bearbeitungswerkzeug 26 ein Stanzmesser, das im Querschnitt in etwa dreieckförmig ausgebildet ist und mit dessen Hilfe Material aus einem Rohling ausgestanzt werden kann, um ein Zahnrad zu bilden. Zur Bewegung des Bearbeitungswerkzeuges 26 ist ein Betätigungsknauf 27 vorhanden, der entsprechend heruntergedrückt werden kann und/oder eine Spindel umfasst, mit der das Betätigungswerkzeug 26 nach unten bewegt werden kann.

Die Ausgestaltung des Bearbeitungswerkzeuges 26 als Stanzklinge ist dabei rein beispielhaft. Das Bearbeitungswerkzeug 26 kann auch ein vertikal verfahrbarer Profilfräser sein, der über ein mitbewegtes Aggregat angetrieben wird. Anstelle eines Profilfräsers kann auch ein entsprechend profiliertes Schleifwerkzeug eingesetzt werden.

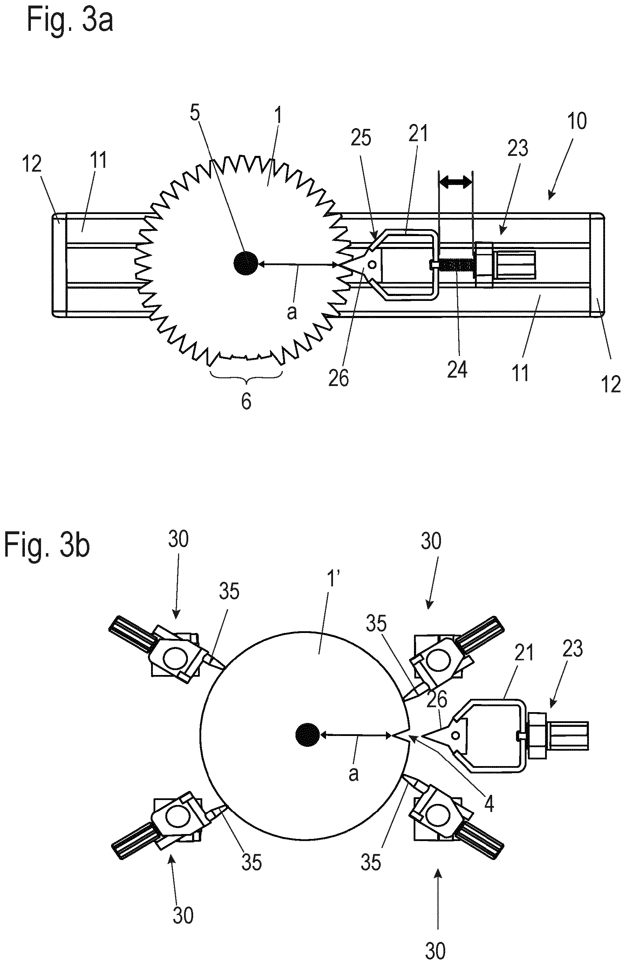

Neben dem Bearbeitungskopf 20 sind an der Führung 10 mehrere Halter 30 angeordnet, die entweder einen Haltedorn 35 oder in einem Fall ein Tastelement 36 halten. Die Halter 30 dienen der Positionierung und Festlegung einer Drehstellung des zu erstellenden Zahnrades, wie im Zusammenhang mit den Figuren 3a-3e noch detaillierter erläutert wird.

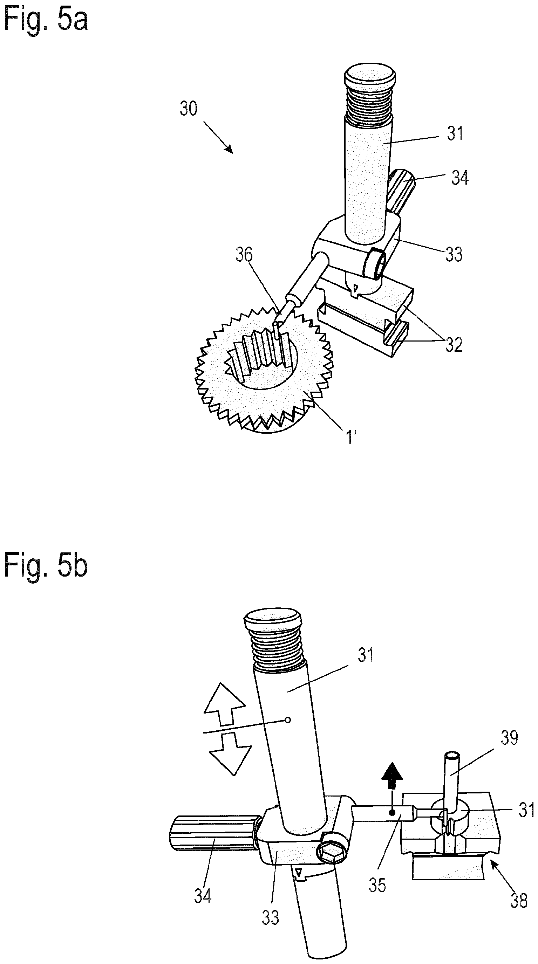

Jeder Halter 30 weist eine Montagestange 31 auf, die mittels eines Montageblocks 32 an der Führung 10 befestigt wird. Im dargestellten Beispiel sind die beiden Montageblöcke 32 der beiden sichtbaren Halter 30 außen an einem der Längsprofile 11 befestigt. In alternativen Ausgestaltungen können die Halter 30 auch mithilfe von Montageblöcken 32, die als Reiter ausgebildet sind, zwischen zwei Längsprofilen 11 festgelegt werden. Ein derartiger Halter 30 ist beispielsweise in Figur 5a gezeigt.

Auf die Montagestange 31 ist jeweils eine Spannzange 33 gesteckt, die mit einer Schraube 34, bevorzugt einer Handschraube (Rädelschraube), spannbar ist. Mit der Schraube 34 kann die Spannzange 33 gelöst werden und so ihre Position und Ausrichtung an der Montagestange 31 verändert werden. Weiter ist, bevorzugt mittels einer separaten, in der Figur 1 nicht dargestellten Schraube, der Haltedorn 35 bzw. das Tastelement 36 in die Spannzange 33 eingespannt. Die Funktion der Halter 30 mit Haltedorn 35 bzw. Tastelement 36 wird ebenfalls mit den Figuren 3a-3e näher erläutert.

Figur 2 zeigt ein Stirnzahnrad als ein Beispiel eines mit der Zahnradbearbeitungsmaschine herstellbaren Zahnrads 1 in einer isometrischen Darstellung.

Das Zahnrad 1 weist eine Vielzahl von Zähnen 2 auf, die im Beispiel gerade Flanken 3 haben. Zwischen den Flanken 3 zweier benachbarter Zähne 2 befindet sich eine Zahnlücke 4. In diese Zahnlücke 4 greifen Zähne eines mit dem Zahnrad 1 kämmenden Zahnrades.

Das Zahnrad 1 weist einen Außendurchmesser dₐ auf. Es ist mit einer zentralen Bohrung 5 versehen, deren Durchmesser einen Innendurchmesser dᵢ des Zahnrades 1 darstellt. Die Bohrung 5 kann in einer allgemeineren Form auch als Wellenaufnahme bezeichnet werden. Sie muss nicht vollständig rund sein, sondern kann eine abgeflachte Seite oder auch eine Passstiftaufnahmeaufweisen. Auch die Form eines Mehrkants, beispielsweise eines Vierkants, ist denkbar. Die Dicke des Zahnrades 1 wird auch als Zahnbreite b bezeichnet.

Das Zahnrad 1 gemäß Figur 2 stellt nur einen Typ eines mit der Zahnradbearbeitungsmaschine der vorliegenden Anmeldung herstellbaren Zahnrades dar. Auch Zahnräder mit einer Innenverzahnung oder einer Kombination aus Innen- und Außenverzahnung sind herstellbar, ebenso wie Zahnstangen, die im Rahmen der Anmeldung auch unter den Begriff "Zahnräder" fallen.

Figur 3a zeigt die Zahnradbearbeitungsmaschine gemäß Figur 1 in einer Draufsicht von oben, wobei die in Figur 1 sichtbaren Halter 30 jedoch abgenommen sind. Auf die Führung ist ein Zahnrad 1 mit seiner Bohrung 5 mittig auf die Führung 10 gelegt. Dabei kann zwischen die Längsprofile 11 der Führung 10 mittels eines Reiters ein nach oben weisender Achsstummel montiert sein, dessen Durchmesser genau der Bohrung 5 entspricht und auf das Zahnrad 1 aufgesetzt ist. Dieses ist zwar vorteilhaft, jedoch lediglich optional und nicht zwingend erforderlich.

Wie in der Figur 3a ersichtlich ist, ist das Zahnrad 1 defekt und weist einen Bereich 6 auf, aus dem Zähne 4 ausgebrochen sind. Es ist weiter ersichtlich, dass das Bearbeitungswerkzeug 26, wiederum eine Stanzklinge, in der Formgebung genau der Zahngeometrie des Zahnrades 1 entspricht, also genau formschlüssig in eine der noch vorhandenen intakten Zahnlücken 4 zwischen zwei Zähnen 2 eingesetzt werden kann.

Mit eingesetztem Bearbeitungswerkzeug 26 lässt sich ein Abstand a vom Rand der Bohrung 5 bis zum Fuß der Zahnlücke 4 zwischen zwei Zähnen 2 messen. Anstelle des Abstands a kann auch die Stellung des Spindelvorschubs 23 gemessen werden. Wichtig ist, dass die charakteristische Größe des Abstands a beim Zahnrad 1 reproduzierbar auf ein neues Zahnrad, das das Zahnrad 1 ersetzt, übertragen werden kann.

Die Herstellung eines derartigen (Ersatz-)Zahnrades wird nachfolgend anhand der Figuren 3b-3e näher erläutert. Aus Gründen der Übersichtlichkeit ist in den Figuren 3b-3e die Führung 10 nicht dargestellt.

In einem ersten Bearbeitungsschritt, der in Figur 3b dargestellt ist, wird das zu ersetzende Zahnrad 1 aus der Zahnradbearbeitungsmaschine entnommen und stattdessen ein Zahnradrohling 1' eingesetzt. Der Zahnradrohling 1' ist scheibenförmig ausgebildet mit einer Dicke, die dem zu ersetzenden Zahnrad 1 entspricht. Er weist denselben Außendurchmesser dₐ wie das zu ersetzenden Zahnrad 1 auf sowie eine Bohrung 5 mit demselben Innendurchmesser dᵢ.

Der Zahnradrohling 1' wird auf die Welle aufgesetzt (falls vorhanden) und (ggf. zusätzlich) über vier Halter 30 mit jeweils eingesetztem Haltedorn 35 in seiner Position und Drehposition festgelegt. Wenn keine Welle vorhanden ist, auf die der Zahnradrohling 1' aufgesetzt werden kann, ist eine Halterung durch die vier dargestellten Haltedorne 35 ebenfalls ausreichend.

Sodann wird mithilfe des Bearbeitungskopfes 20 eine Zahnlücke 4 in den Zahnradrohling 1' eingestanzt, indem der korrekte Abstand a zwischen Befestigungsloch und Spitze des Bearbeitungswerkzeuges 26 eingestellt wird und dieses so betätigt wird, dass die Zahnlücke 4 im Zahnradrohling 1' entsteht. Bei dem dargestellten Betätigungswerkzeug 26, das als Stanzklinge ausgebildet ist, kann das Ausbilden der Zahnlücke 4 in mehreren hintereinander folgenden Schritten erfolgen, wobei die Position des Bearbeitungswerkzeuges 26 über den Spindelvorschub 23 zwischen zwei Bearbeitungsschritten stückweise in Richtung des Mittelpunkts des Rohlings 1' verschoben wird. Die Figur 3b zeigt dann das Resultat des Bearbeitungsschrittes, nachdem der Bearbeitungskopf 20 wieder zurückgezogen worden ist.

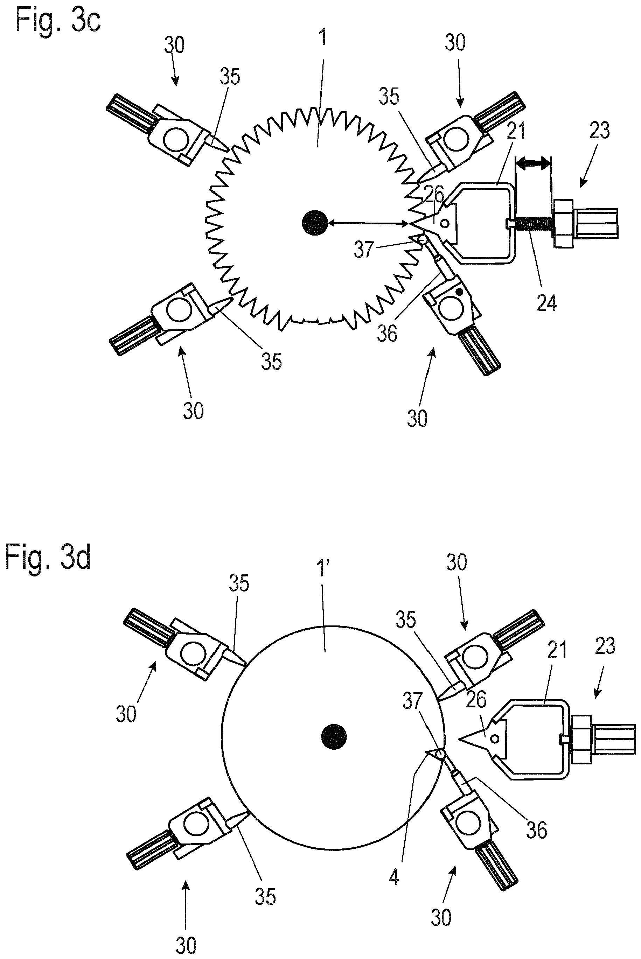

In einem nächsten Schritt, der in Figur 3c dargestellt ist, wird der Zahnradrohling 1' wieder entnommen und durch das beschädigte Zahnrad 1 ersetzt. Der Bearbeitungskopf 20 wird wieder so in Position gebracht, dass das Bearbeitungswerkzeug 26 vollständig in einer Zahnlücke zwischen Zähnen 2 des Zahnrades 1 positioniert ist.

Bei einem der dem Bearbeitungskopf 20 benachbarten Halter 30 wird der Haltedorn 35 gegen ein Tastelement 36 getauscht. Im dargestellten Fall weist das Tastelement 36 einen zylinderförmigen Tastkopf 37 auf, der in eine Zahnlücke 4 des Zahnrades 1 eingesetzt wird und zwar in die unmittelbar dem Bearbeitungswerkzeug 26 benachbarte, nächste der Zahnlücken 4.

Durch das Tastelement 36 und den Tastkopf 37 wird die Position der nächsten Zahnlücke 4 gegenüber dem Bearbeitungswerkzeug 26 erfasst und somit der Modulo des Zahnrades 1 gewissermaßen abgetastet. Es wird auf diese Weise eine Lehre für das zu erstellende Zahnrad gebildet, so dass dieses in den nächsten Bearbeitungsschritten den gleichen Modulo aufweist und somit eine Kopie des zu ersetzenden Zahnrades darstellt.

In einem nächsten Schritt, der in Figur 3d dargestellt ist, wird das beschädigte Zahnrad 1 wieder entnommen und der Zahnradrohling 1' in die Zahnradbearbeitungsvorrichtung eingesetzt. Dieses erfolgt gerade so, dass das Tastelement 36 mit seinem Tastkopf 37 genau in die Zahnlücke 4, die im Bearbeitungsschritt der Figur 3b erstellt worden ist, eingreift. Nur in dieser Position lässt sich der Zahnradrohling 1' auch zwischen die Haltedorne 35 und das Tastelement 36 einsetzen.

Der Zahnradrohling 1' ist auf diese Weise in einer genau definierten Drehstellung fixiert und es kann mithilfe des Bearbeitungskopfes 20 eine weitere Zahnlücke 4, die der bereits vorhandenen Zahnlücke 4 benachbart ist, in den Zahnradrohling 1' eingearbeitet werden.

Der in Figur 3d gezeigte Schritt wird mehrfach wiederholt, wobei der Zahnradrohling 1' jeweils angehoben und um eine Zahnposition weitergedreht wird, so dass mit dem Bearbeitungskopf 20 jeweils eine neue Zahnlücke 4 in den Zahnradrohling 1' eingebracht werden kann.

Prinzipiell wird diese Vorgehensweise so lange durchgeführt, bis der Zahnradrohling 1' schließlich an seinem gesamten Umfang mit Zahnlücken 4 und somit auch Zähnen 2 versehen ist und damit zum (Ersatz-) Zahnrad geworden ist.

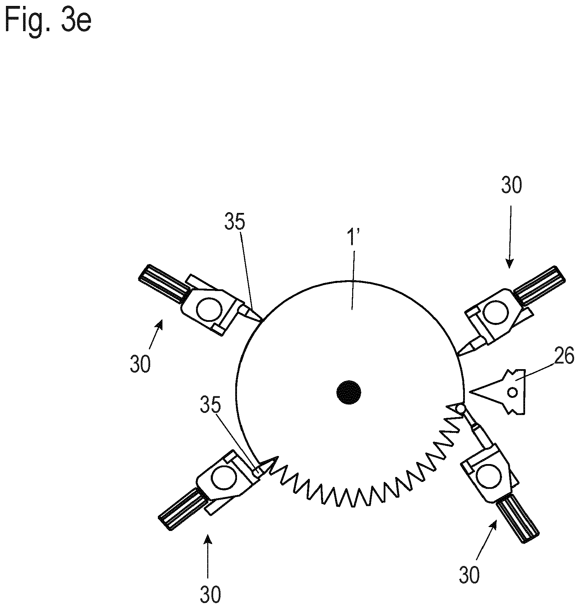

Figur 3e zeigt einen Zwischenzustand in dieser Vorgehensweise, bei dem bereits so viele Zahnlücken 4 erstellt worden sind und damit so viele Zähne 2 ausgebildet sind, dass die erste erstellte Zahnlücke 4 sich im Bereich eines der Haltedorne 35 befindet. In diesem Zustand wird der entsprechende Haltedorn 35 bevorzugt in der Spannzange 33 vorgeschoben bzw. der Halter 30 neu ausjustiert, so dass der Haltedorn 35 in einen Zahnlücke 4 eingreift. Bei weiterer Ausformung von Zahnlücken 4 wird mit den verbleibenden Haltedornen 35 ebenso verfahren.

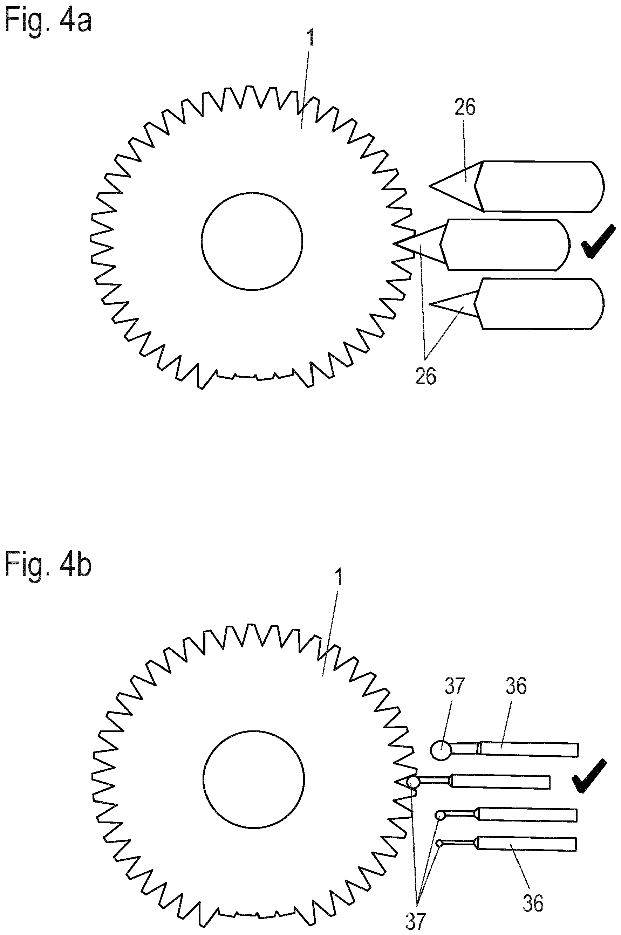

In Figur 4a ist im Zusammenhang mit einem defekten, zu ersetzenden Zahnrad 1 eine Auswahl verschiedener Bearbeitungswerkzeuge 26 gezeigt, die sich in ihrer Geometrie unterscheiden. Die Figur symbolisiert, dass es wichtig ist, bei einem zu ersetzenden Zahnrad das geeignete und an die Zahngeometrie des Zahnrades 1 angepasste Bearbeitungswerkzeug 26 auszuwählen. Eine korrekte Geometrie passt vorteilhaft formgenau in eine der Zahnlücken 4 zwischen zwei Zähnen 2.

Beispielhaft sind drei verschiedene zur Auswahl stehende Geometrien dargestellt, die allesamt eine dreieckige Form aufweisen, mit jedoch unterschiedlichem Winkel an der Spitze des Bearbeitungswerkzeuges 26. Es versteht sich, dass Bearbeitungswerkzeuge 26 auch in anderer Formgebung bereitgestellt sein können, insbesondere zur Erstellung einer Evolventenverzahnung oder einer Zykloidenverzahnung.

In Figur 4b ist in vergleichbarer Weise wie in Figur 4a eine Auswahl verschiedener Tastelemente 36 mit unterschiedlichen Tastköpfen 37 dargestellt. Im Beispiel stehen vier verschiedene Tastelemente 36 jeweils mit zylindrischem Tastkopf 37 bereit, wobei sich die Tastköpfe 37 im Durchmesser unterscheiden. Die Figur symbolisiert, dass ein gut und formschlüssig an beiden Flanken anliegender Tastkopf 37 am besten geeignet ist, um den Modulo des zu ersetzenden Zahnrades 1 fehlerfrei auf das zu erstellende Zahnrad zu übertragen.

In Figur 5a ist ein weiteres Ausführungsbeispiel eines Halters 30 in einer isometrischen Zeichnung dargestellt. In den Halter 30 ist ein Tastelement 36 eingesetzt, dessen Tastkopf 37 im gezeigten Beispiel in eine Innenverzahnung eines Zahnradrohlings 1' eingreift. Aus dem Zahnradrohlings 1' wird ein innensowie außenverzahntes Zahnrad erstellt, wobei die Außenverzahnung bereits fertiggestellt ist und von der Innenverzahnung eine Anzahl von Zähnen bereits ausgebildet ist.

Der Halter 30 weist wiederum eine Montagestange 31 auf, die mit einem unteren Ende in einem Montageblock 32 befestigt ist und an der eine Spannzange 33 mittels einer Schraube 34 verstellbar festgelegt ist. In der Spannzange 33 ist zudem das bereits genannte Tastelement 36 eingespannt, wofür eine weitere Schraube, hier ausgebildet als Innensechskantschraube, zur Verfügung steht.

Der Montageblock 32 ist im dargestellten Beispiel als Reiter für eine Befestigung des Halters 30 zwischen zwei Längsprofilen 11 (vgl. Figur 3a) vorgesehen.

Als Besonderheit bei dem dargestellten Halter 30 ist die Montagestange 31 zweiteilig ausgebildet, wobei ein unterer Teil in dem Montageblock 32 befestigt ist und sich mit dünnerem Querschnitt nach oben weiter fortsetzt. Über diesen dünneren Querschnitt ist im mittleren Bereich eine Hülse geschoben, die von der Spannzange 33 umgriffen wird und an der die Spannzange 33 befestigt wird. Die Hülse wird beispielsweise federkraftbeaufschlagt nach unten gedrückt und weist an ihrem unteren Ende eine Kontur auf, mit der sie verdrehsicher in eine Gegenkontur am unteren Teil der Montagestange 31 eingreift.

Durch diese Ausgestaltung der Montagestange 31 kann die Spannzange 33 und mit ihr das Tastelement 36 angehoben werden, um den Zahnradrohling 1' nach Erstellen einer Zahnlücke zwischen zwei Zähnen um eine Position weiterzudrehen und die nächste Zahnlücke zwischen zwei Zähnen zu bearbeiten.

Figur 5b zeigt den Halter 30, diesmal ohne den Montageblock 32, aus einer anderen Perspektive, in der die Trennung zwischen dem unteren Teil der Montagestange 31 und der verschiebbaren Hülse ersichtlich ist. Aus dieser Perspektive ist auch die am unteren Ende der Hülse vorgesehene Kontur, die in die entsprechende Gegenkontur eingreift, zu erkennen.

In der Figur 5b ist beispielhaft die Herstellung eines kleinen Zahnrades gezeigt, das auf eine Achse 39 aufgesteckt ist, die von einem Reiter 38 gehalten wird, der ähnlich wie der Montageblock 32 der Figur 5a zwischen zwei Längsprofilen 11 der Führung 10 montiert werden kann.

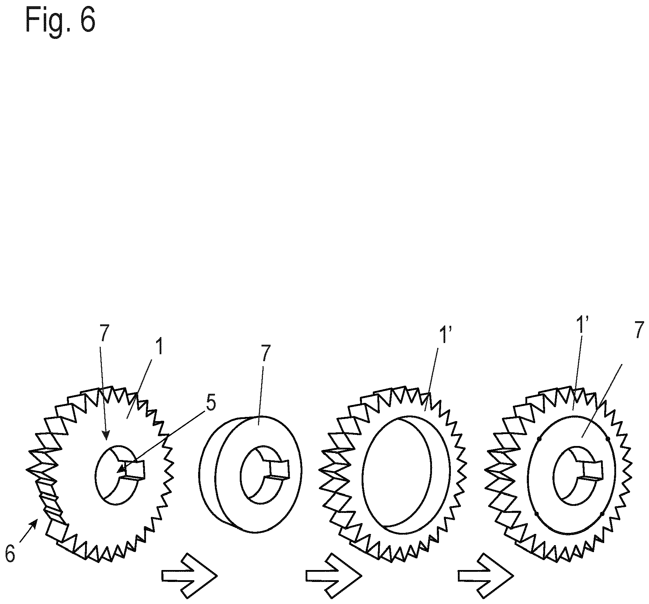

In Figur 6 ist schematisch verdeutlicht, wie ein zu ersetzendes Zahnrad 1 (links in der Abbildung) erneuert werden kann, obwohl dieses Zahnrad 1 eine komplizierte Achsaufnahme aufweist, konkret eine Achsaufnahme, die aus einer Bohrung 5 mit Passstiftnut besteht.

Die Vorgehensweise ist derart, dass ein zentraler Bereich 7 des zu ersetzenden Zahnrades 1, der die Achsaufnahme umfasst, für das Ersatzzahnrad übernommen wird. Zu dem Zweck wird der zentrale Bereich 7 auf einer Drehbank aus dem zu ersetzenden Zahnrad 1 herausgearbeitet, so dass er als eine Art Einsatzring vorliegt (vgl. zweite Teilfigur von links in Figur 6). Anschließend wird ein Zahnring mit einem Innendurchmesser, der dem Außendurchmesser des zentralen Bereichs 7 entspricht mit der erfindungsgemäßen Zahnradbearbeitungsmaschine erstellt. Die Vorgehensweise entspricht dabei der zuvor im Zusammenhang mit den Figuren 3a-3e beschriebenen. Das Resultat ist in der dritten Teilfigur von links in Figur 6 dargestellt.

Schließlich werden beide Elemente, der zentrale Bereich 7 mit der Achsaufnahme und der als Ersatz hergestellte Zahnring aus dem Zahnradrohling 1' zusammengefügt und z. B. durch eine Klebung und/oder ein zusätzliches Einsetzen von Passstiften miteinander verbunden, so dass das rechts in der Figur 6 gezeigte Ersatzzahnrad entsteht.

### Bezugszeichenliste

- 1: defektes Zahnrad
- 1': Zahnradrohling
- 2: Zahn
- 3: Flanke
- 4: Zahnlücke
- 5: Bohrung
- 6: ausgebrochener Bereich
- 7: zentraler Bereich

- 10: Führung
- 11: Längsprofil
- 12: Querverbinder

- 20: Bearbeitungskopf
- 21: Ständer
- 22: Befestigung
- 23: Spindelvorschub
- 24: Spindel
- 25: Vertikalführung
- 26: Bearbeitungswerkzeug
- 27: Betätigungsknauf

- 30: Halter
- 31: Montagestange
- 32: Montageblock
- 33: Spannzange
- 34: Schraube
- 35: Haltedorn
- 36: Tastelement
- 37: Tastkopf
- 38: Reiter
- 39: Achse

## Patentansprüche

1. Zahnradbearbeitungsmaschine mit einer Halterung für einen Zahnradrohling (1') und mit einem Bearbeitungskopf (20) mit einem Bearbeitungswerkzeug (26), um mindestens eine Zahnlücke (4) eines Zahnes (2) zu bearbeiten und sukzessive aus dem Zahnradrohling (1') ein Zahnrad zu erstellen, **dadurch gekennzeichnet, dass**
ein Tastelement (36) vorhanden ist, das an mindestens einer Flanke (3) in einer bereits erstellten Zahnlücke (4) des Zahnradrohlings (1') anliegt und eine Drehstellung des Zahnradrohlings (1') für ein Bearbeiten einer weiteren Zahnlücke (4) festlegt.

2. Zahnradbearbeitungsmaschine nach Anspruch 1, bei der das Bearbeitungswerkzeug (26) gleichzeitig zwei sich gegenüberliegende Flanken (3) in einer Zahnlücke (4) bearbeitet.

3. Zahnradbearbeitungsmaschine nach Anspruch 2, bei der das Bearbeitungswerkzeug (26) ein Stanzwerkzeug, insbesondere eine Stanzklinge, ist.

4. Zahnradbearbeitungsmaschine nach einem der Ansprüche 1 bis 3, bei der das Tastelement (36) in die Zahnlücke (4) eingreift und gleichzeitig an beiden sich gegenüberliegenden Flanken (3) zweier benachbarter Zähne (2) in der Zahnlücke (4) anliegt.

5. Zahnradbearbeitungsmaschine nach Anspruch 4, bei der das Tastelement (36) einen Tastkopf (37) in Form eines Zylinders aufweist.

6. Zahnradbearbeitungsmaschine nach einem der Ansprüche 1 bis 5, aufweisend eine horizontal ausgerichtete Führung (10), an der der Bearbeitungskopf (20) verschiebbar angeordnet ist und auf der Zahnradrohling (1') gehalten ist.

7. Zahnradbearbeitungsmaschine nach einem der Ansprüche 1 bis 6, bei der die Halterung des Zahnradrohlings (1') eine Achse (39) aufweist, die in eine Bohrung (5) des Zahnradrohlings (1') eingreift.

8. Zahnradbearbeitungsmaschine nach einem der Ansprüche 1 bis 7, bei der die Halterung des Zahnradrohlings (1') über mindestens einen Haltedorn (35) erfolgt, der an einem Außenumfang des Zahnradrohlings (1') anliegt oder in eine bereits erstellte Zahnlücke (4) eingreift.

9. Zahnradbearbeitungsmaschine nach Anspruch 8, bei der mindestens einen Haltedorn (35) in einem Halter (30) befestigt ist, der an der Führung (10) festlegbar ist.

10. Zahnradbearbeitungsmaschine nach einem der Ansprüche 1 bis 7, bei der das Tastelement (36) in einem Halter (30) befestigt ist, der an der Führung (10) festlegbar ist.

11. Zahnradbearbeitungsmaschine nach Anspruch 9 oder 10, bei der der Halter (30) eine Spannzange (33) zur verstellbaren Befestigung des Haltedorn (35) oder des Tastelement (36) aufweist.

12. Verfahren zur Herstellung eines Zahnrads aus einem Zahnradrohling (1') anhand eines defekten Zahnrads (1) mit einer Zahnradbearbeitungsmaschine gemäß einem der Ansprüche 1 bis 11, aufweisend die folgenden Schritte:
- Einsetzen des Zahnradrohlings (1') in eine Halterung der Zahnradbearbeitungsmaschine;
- Erstellen einer Zahnlücke (4) mithilfe eines Bearbeitungswerkzeugs (26) der Zahnradbearbeitungsmaschine;
- Entnehmen des Zahnradrohlings (1) und Einsetzen des defekten Zahnrads (1) in die Halterung;
- Ausrichten einer Drehstellung des defekten Zahnrads (1) so, dass das Bearbeitungswerkzeug (26) korrekt in eine noch intakte Zahnlücke (4) des defekten Zahnrads (1) eingreift;
- Einsetzen eines Tastelements (37) in eine weitere Zahnlücke (4), die der Zahnlücke (4), in die das Bearbeitungswerkzeug (26) eingreift, benachbart ist und Fixieren des Tastelements (37) in dieser Stellung;
- Entnehmen des defekten Zahnrads (1);
- Einsetzen des Zahnradrohlings (1) in die Halterung, wobei das Tastelement (37) in die zuletzt erstellte Zahnlücke (4) eingreift; und
- Erstellen einer weiteren Zahnlücke (4) mithilfe des Bearbeitungswerkzeugs (26).

13. Verfahren nach Anspruch 12, bei dem die beiden letztgenannten Schritte sukzessive wiederholt werden, bis der Zahnradrohling (1') eine benötigte Anzahl an Zahnlücken (4) und damit Zähnen (2) aufweist.
